# EUROPEAN PATENT SPECIFICATION

(11) **EP 4 521 529 B1**
(45) Date of publication and mention of the grant of the patent: **10.06.2026**
(21) Application number: 24757061.7
(22) Date of filing: 25.01.2024
(51) Int. Cl.: H01M 50/242, H01M 10/42, H01M 50/271, H01M 50/211, H01M 50/262, H01M 50/287, H01M 50/291, H01M 50/505

(54) **BATTERY PACK HAVING EXCELLENT IMPACT RESISTANCE**
BATTERIEPACK MIT HERVORRAGENDER STOSSFESTIGKEIT
BLOC-BATTERIE AYANT UNE EXCELLENTE RÉSISTANCE AUX CHOCS

(30) Priority: 13.02.2023 KR 20230018619
(43) Date of publication of application: 12.03.2025
(73) Proprietor: LG Energy Solution, Ltd., Seoul 07335 (KR)
(72) Inventor: JANG, Jae Young, Daejeon 34122 (KR); SON, Hyuk Joon, Daejeon 34122 (KR); LEE, Jin Hyun, Daejeon 34122 (KR); JUNG, Dae Ho, Daejeon 34122 (KR)
(74) Representative: Plasseraud IP
(86) International application number: PCT/KR2024/001173
(87) International publication number: WO 2024/172331

(56) References cited:
- WO-A1-2023/063591
- JP-A- 2017 112 004
- KR-A- 20070 071 249
- KR-A- 20180 122 844
- KR-A- 20200 098 804
- KR-A- 20200 098 804
- KR-A- 20210 069 906
- KR-A- 20210 069 906
- KR-A- 20240 100 674
- US-A1- 2020 328 397

## Description

### [Technical Field]

This application claims the benefit of priority to Korean Patent Application No. 2023-0018619 filed on February 13, 2023.

The present invention relates to a battery pack having excellent impact resistance, and more particularly to a battery pack having excellent impact resistance configured such that the battery pack is prevented from being bent by external force, whereby damage to a BMU is minimized.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of lithium secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, if the device is a tablet PC, a movable slim TV, or a portable laptop computer, the device must have high impact resistance although it is important to reduce the weight of the device.

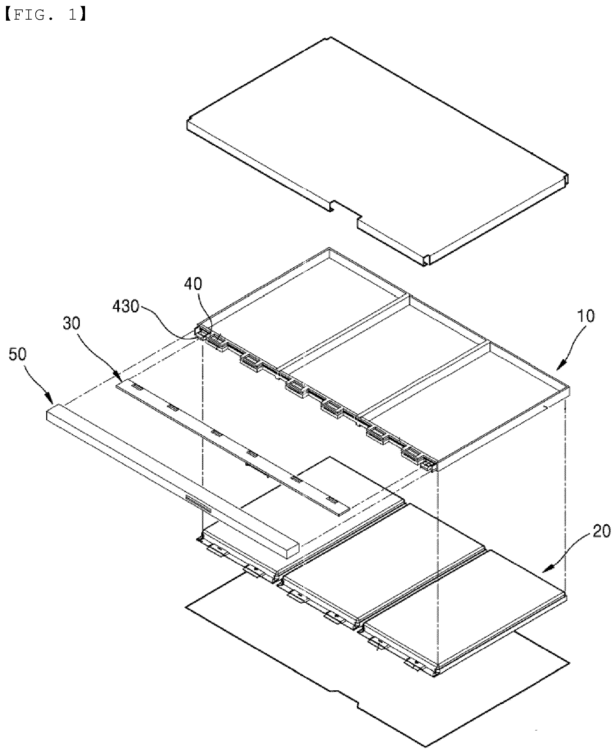

FIG. 1 is an exploded perspective view of a conventional battery pack. As shown in FIG. 1, the battery pack includes a battery cell 20, a protection circuit module 30 electrically connected to an electrode tab extending from the battery cell, a protection circuit module cover 50, and a first pressing rib 40 protruding from a frame 10 having formed therein a cell receiving portion configured to receive the battery cell in a direction opposite the cell receiving portion, the first pressing rib being configured to press the electrode tab and the protection circuit module in a direction in which the electrode tab and the protection circuit module face each other.

However, the conventional battery pack has a rectangular structure in which a plurality of battery cells is disposed side by side, whereby the battery pack may be easily bent by external force in a longitudinal direction.

### (Prior Art Document)

(Patent Document 1) Korean Patent Application Publication No. 2019-0048069 (2019.05.09)
Battery packs are disclosed in documents KR 2020 0098804 A, KR 2021 0069906 A and WO 2023/063591 A1.

### [Disclosure]

### [Technical Problem]

The present invention has been made in view of the above problems, and it is an object of the present invention to provide a battery pack having excellent impact resistance capable of prevent damage to a battery management unit that may occur due to bending of the battery pack caused by external force, such as external impact.

It is another object of the present invention to provide a battery pack that is convenient to assemble while improving welding quality.

### [Technical Solution]

In order to accomplish the above objects, a battery pack according to the present invention includes a frame unit (100) including a quadrangular outer frame (110) configured to define a receiving space (S) and a support frame (120) located inside an edge of one side of the outer frame (110) in a longitudinal direction of the frame unit; a battery cell (200) received in the receiving space (S); a BMU (300) having one surface facing an upper surface of the support frame (120), the BMU being electrically connected to the battery cell (200); and a BMU cover (400) including a cover plate (410) located at another surface of the BMU (300), wherein the frame unit further includes at least one first rib (140) extending in a width direction of the frame unit, one side of the at lease one first rib being connected to the outer frame (110) and a second rib (150) located along an edge of the support frame (120) in the longitudinal direction, the second rib being connected to another side of the at least one first rib (140), the second rib having a double rib structure.

Also, in the battery pack according to the present invention, the support frame (120) includes a first seating portion (121) and a second seating portion (122) that is thicker than the first seating portion (121).

Also, in the battery pack according to the present invention, the first seating portion (121) has a first opening (121a), and a terminal of the battery cell (200) may be seated on the first seating portion.

Also, in the battery pack according to the present invention, a printed circuit board (310) of the BMU (300) may be seated on the second seating portion (122).

Also, in the battery pack according to the present invention, the support frame includes a plurality of receiving portions (130) at the upper surface of the support frame (120) in at least one of the longitudinal direction and in the width direction, and the cover plate (410) may have a plurality of insertion portions configured to be inserted into the plurality of receiving portions.

Also, in the battery pack according to the present invention, the plurality of receiving portions (130) may include a first receiving portion (131) including a first receiving plate (131a) provided at an edge of one side of the support frame (120) in the width direction, the first receiving plate being located spaced apart from an inner surface of the outer frame (110) having a certain height by a predetermined distance, the first receiving plate having a first fastening hole (131a'), and a first connection portion (131b) configured to connect the first receiving plate (131a) and the outer frame (110) to each other, and
the plurality of insertion portions may include a first insertion portion (431) including a first insertion plate (431a) extending vertically from an edge of one side of the cover plate (410) in the width direction and a first hook (431b) formed on an inner surface of the first insertion plate (431a) so as to be fastened to the first fastening hole (131a').

Also, in the battery pack according to the present invention, the plurality of receiving portions (130) may include a second receiving portion (132) including a second receiving plate (132a) provided at an edge of one side of the support frame (120) in the longitudinal direction, the second receiving plate being located spaced apart from the inner surface of the outer frame (110) having the certain height by a predetermined distance, the second receiving plate having a second fastening hole (132a'), and a pair of second connection portions (132b) configured to connect the second receiving plate (132a) and the outer frame (110) to each other, and the plurality of insertion portions may include a second insertion portion (432) including a second insertion plate (432a) extending vertically from the edge of the cover plate (410) and a second hook (432b) formed on an inner surface of the second insertion plate (432a) so as to be fastened to the second fastening hole (132a').

Also, in the battery pack according to the present invention, the plurality of receiving portions (130) may include a third receiving portion (133) including a third receiving plate (133a) provided at an edge of another side of the support frame (120) in the width direction, the third receiving plate being located spaced apart from the inner surface of the outer frame (110) having the certain height by a predetermined distance, the third receiving plate having a third fastening hole (133a'), and a third connection portion (133b) configured to connect the third receiving plate (133a) and the outer frame (110) to each other, and the plurality of insertion portions may include a third insertion portion (433) including a third insertion plate (433a) extending vertically from an edge of another side of the cover plate (410) in the width direction and a third hook (433b) formed on an inner surface of the third insertion plate (433a) so as to be fastened to the third fastening hole (133a').

Also, in the battery pack according to the present invention, the second rib (150) may have a lattice structure.

Also, in the battery pack according to the present invention, the cover plate (410) may have at an inner surface thereof facing the another surface of the BMU (300) a third rib (420) formed so as to intersect in at least one of the width direction and the longitudinal direction.

Also, in the battery pack according to the present invention, the cover plate (410) may have at least one second opening (411).

### [Advantageous Effects]

As is apparent from the above description, a battery pack having excellent impact resistance according to the present invention has the merit that a support frame, at which an electrode terminal, a BMU, and a BMU cover are located, has thickness variation, whereby it is possible to inhibit an increase in the thickness of the battery pack while minimizing a bending phenomenon in a longitudinal direction or a width direction.

In addition, the battery pack having excellent impact resistance according to the present invention has the advantage that the support frame is provided with a plurality of receiving portions formed in the longitudinal direction and the width direction and the BMU cover is provided with insertion portions, each of which is inserted into a corresponding one of the receiving portions, whereby it is possible to protect the BMU from external impact or the bending phenomenon.

In addition, the battery pack having excellent impact resistance according to the present invention has the merit that a second rib having a lattice structure is located spaced apart from each of the receiving portions by a predetermined distance so as to face the receiving portion, whereby it is possible to minimize the bending phenomenon at the interface between battery cells that are vulnerable to longitudinal bending deformation.

In addition, the battery pack having excellent impact resistance according to the present invention has the advantage that the BMU cover is provided with a plurality of secondary openings, whereby it is possible to improve the heat dissipation effect without interfering with devices mounted on a printed circuit board.

### [Description of Drawings]

FIG. 1 is an exploded perspective view of a conventional battery pack.
FIG. 2 is a perspective view of a battery pack according to a preferred embodiment of the present invention when viewed in one direction.
FIG. 3 is an exploded perspective view of the battery pack shown in FIG. 2.
FIG. 4 is a perspective view of a battery cell constituting the battery pack according to the present invention.
FIG. 5 is a perspective view of a frame unit constituting the battery pack according to the present invention when viewed in one direction.
FIG. 6 is a perspective view of the frame unit shown in FIG. 5 when viewed in the other direction.
FIG. 7 is an enlarged perspective view of part A of FIG. 5.
FIG. 8 is an enlarged perspective view of part B of FIG. 5.
FIG. 9 is an enlarged perspective view of part C of FIG. 5.
FIG. 10 is a perspective view of a BMU cover constituting the battery pack according to the present invention when viewed from above.
FIG. 11 is an inverted perspective view of the BMU cover shown in FIG. 10.
FIG. 12 is a front view of the BMU cover shown in FIG. 10.
FIG. 13 is an enlarged perspective view of part A of FIG. 11.
FIG. 14 is an enlarged perspective view of part B of FIG. 11.
FIG. 15 is an enlarged perspective view of part C of FIG. 11.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the drawings, an X-axis direction is defined as a longitudinal direction, a Y-axis direction is defined as a width direction, and a Z-axis direction is defined as a height direction.

In addition, one surface and the other surface mean surfaces that face each other in the Z-axis direction, and one side surface and the other side surface mean the side surfaces that face each other in the X-axis direction or the Y-axis direction.

Hereinafter, a battery pack having excellent impact resistance according to the present invention will be described with reference to the accompanying drawings.

The battery pack according to the present invention may be mounted in a tablet PC, a laptop computer, or a slim TV, preferably in a tablet PC, but the present invention is not limited thereto.

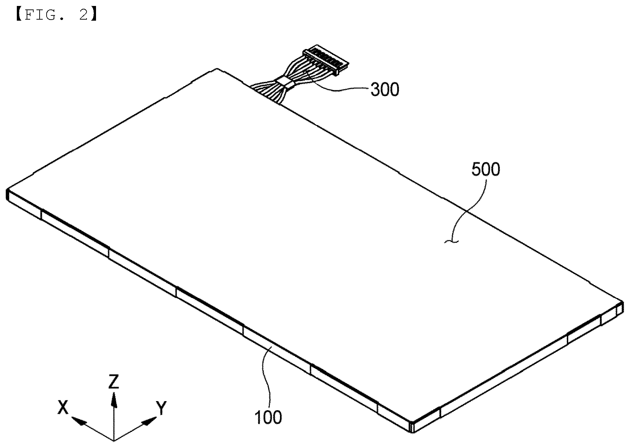

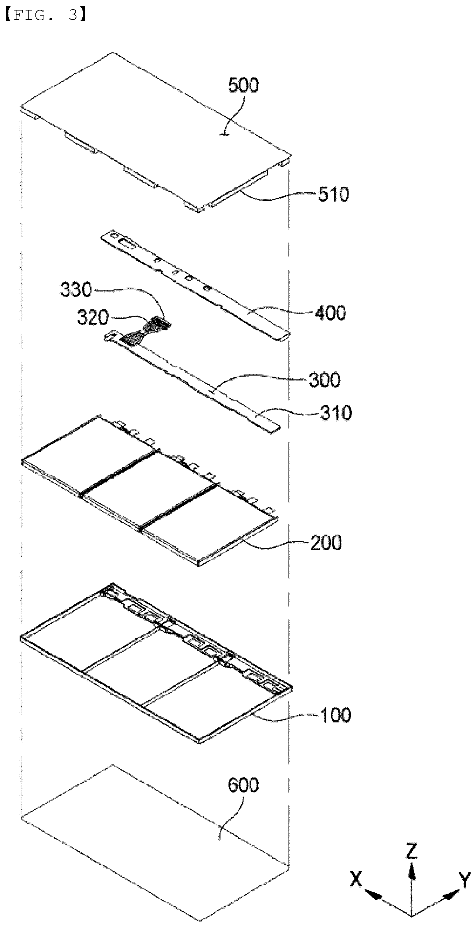

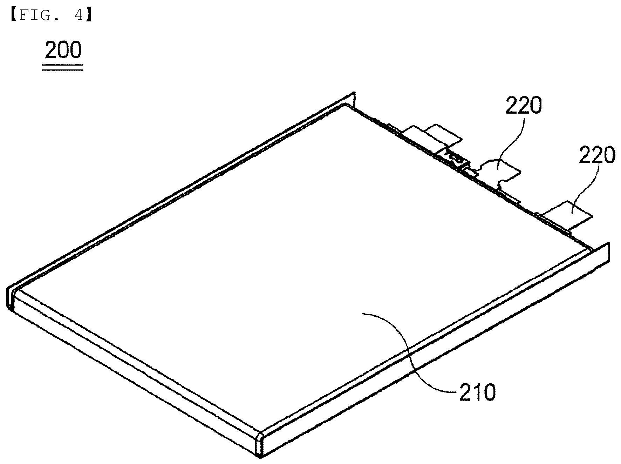

FIG. 2 is a perspective view of a battery pack according to a preferred embodiment of the present invention when viewed in one direction, FIG. 3 is an exploded perspective view of the battery pack shown in FIG. 2, and FIG. 4 is a perspective view of a battery cell constituting the battery pack according to the present invention.

As shown in FIGs. 2 to 4, the battery pack according to the present invention may include a frame unit 100, a plurality of battery cells 200 received in the frame unit 100, a BMU 300 electrically connected to the battery cells 200, a BMU cover 400 configured to protect the BMU 300, a first packaging member 500 located at one surface of the frame unit 100, and a second packaging member 600 located at the other surface of the frame unit 100.

The frame unit 100 is configured to receive and fix the battery cells 200, the BMU 300, and the BMU cover 400 and to protect the same from external impact, and is approximately quadrangular in overall shape, a description of which will follow.

Each of the battery cells 200 received in the frame unit 100 is preferably a pouch-shaped battery cell, and the pouch-shaped battery cell may include a cell case 210, an electrode assembly (not shown) received in the cell case 210, and a pair of electrode terminals 220, each of which has one side connected to a tab bundle of the electrode assembly and the other side protruding outward from the cell case 210.

Here, the cell case 210 may be constituted by a first case and a second case, wherein a pocket-shaped receiving portion configured to receive the electrode assembly (not shown) is formed in at least one of the first case and the second case. The cell case 210 is made of a laminate sheet including an outer resin layer, a metal layer, and an inner resin layer in order to form the receiving portion therein.

The outer resin layer, which is located at the outermost side of the cell case 210, may be made of a heat-resistant polymer that exhibits excellent tensile strength, resistance to moisture permeation, and resistance to air transmission in order to secure heat resistance and chemical resistance while protecting the electrode assembly. As an example, the outer resin layer may be made of nylon or polyethylene terephthalate; however, the present invention is not limited thereto.

The metal layer, which abuts the outer resin layer, corresponds to a barrier layer configured to prevent external moisture or various kinds of gas from permeating into a battery. An aluminum thin film, which is lightweight and easily shapeable, may be used as a preferred material for the metal layer.

The inner resin layer is disposed in direct contact with the electrode assembly, and therefore the inner resin layer must exhibit high insulation properties and high electrolytic resistance. In addition, the inner resin layer must exhibit high sealability in order to hermetically seal the cell case from the outside, i.e., a thermally-bonded sealed portion between the inner resin layers must exhibit excellent thermal bonding strength. The inner resin layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical properties, such as tensile strength, rigidity, surface hardness, and impact resistance, and excellent chemical resistance, is the most preferably used.

The electrode assembly (not shown) has a structure in which negative electrodes and positive electrodes are alternately stacked a plurality of times while a separator is interposed between each of the negative electrodes and a corresponding one of the positive electrodes, and a negative electrode terminal and a positive electrode terminal, constituting the pair of electrode terminals 220, are electrically connected to negative electrode tabs and positive electrode tabs, respectively, and are exposed out of the cell case 210.

More specifically, the electrode assembly may be a jelly-roll type electrode assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Although three unit cells 200 are shown as being mounted in the frame unit 100 in FIGs. 2 and 3, the present invention is not limited thereto, and two unit cells or four or more unit cells may be mounted in the frame unit.

The battery management unit (BMU) 300, which is configured to control the operation of the battery cells 200, includes a printed circuit board 310, a BMU cable 320, and a BMU connector 330. Specifically, the positive electrode terminals and the negative electrode terminals of the battery cells 200 are electrically/mechanically connected to the printed circuit board 310, which controls power supplied to a device (not shown) through the cable 320 and the connector 330. The BMU functions to recognize overcharge, overdischarge, or overcurrent and to prevent overheating or explosion that may result therefrom. Of course, it is obvious that an element (not shown) configured to maintain charging and discharging voltage and/or current and to prevent an overcharge state and/or an overdischarge state may be provided. The BMU 300 is an apparatus known in the art, and therefore a more detailed description thereof will be omitted.

Next, the BMU cover 400 is configured to prevent damage to the BMU 300, and is seated on one surface of the BMU 300, i.e., an upper surface of the BMU 300 when viewed from the figures. When the frame unit 100 is bent in the longitudinal direction (X-axis direction) or the width direction (Y-axis direction) due to various factors such as external force, the BMU 300 may also be bent, causing the parts constituting the BMU 300 to break or fail, and therefore it is desirable to provide the BMU cover 400 in order to protect the BMU 300 from external force.

The BMU cover 400 configured to perform the above-mentioned function is preferably wide enough to completely cover the BMU 300, and is more preferably made of an insulating material in order to prevent short circuit. A detailed description of the BMU cover 400 will be described later.

The first packaging member 500 is mounted to cover one surface of the frame unit 100, that is, an upper surface of the frame unit 100 based on FIG. 3. The first packaging member is preferably made of a thin sheet that is large enough to cover the entirety of the upper surface of the frame unit 100, and is more preferably provided along an edge thereof with a plurality of fixing portions 510 formed so as to extend to a part of the other surface of the frame unit 100 such that the first packaging member does not easily fall off after being attached to the frame unit 100. In this case, the entirety of an inner surface of the first packaging member 500 or an inner surface of each of the fixing portions 510 may be provided with an adhesive layer.

The second packaging member 600 is mounted on the other surface of the frame unit 100, i.e., a lower surface of the frame unit 100, and is made of a thin sheet having a size sufficient to cover the entirety of the lower surface of the frame unit 100, which may be the same material as the first packaging member 500.

Preferably, an adhesive layer is formed on an inner surface of the second packaging member 600, i.e., the surface of the second packaging member that abuts the lower surface of the frame unit 100.

As described above, the first packaging member 500 and the second packaging member 600 are located at the upper surface and the lower surface of the frame unit 100, respectively, to fix the frame unit 100, the battery cells 200, the BMU 300, and the BMU cover 400 to prevent movement thereof and to protect the same from external impact. Of course, permeation of external foreign matter or moisture may also be prevented.

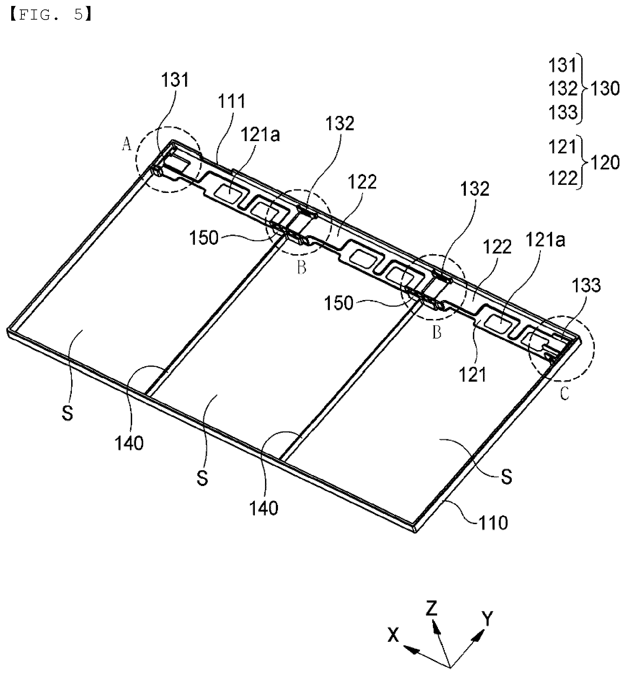

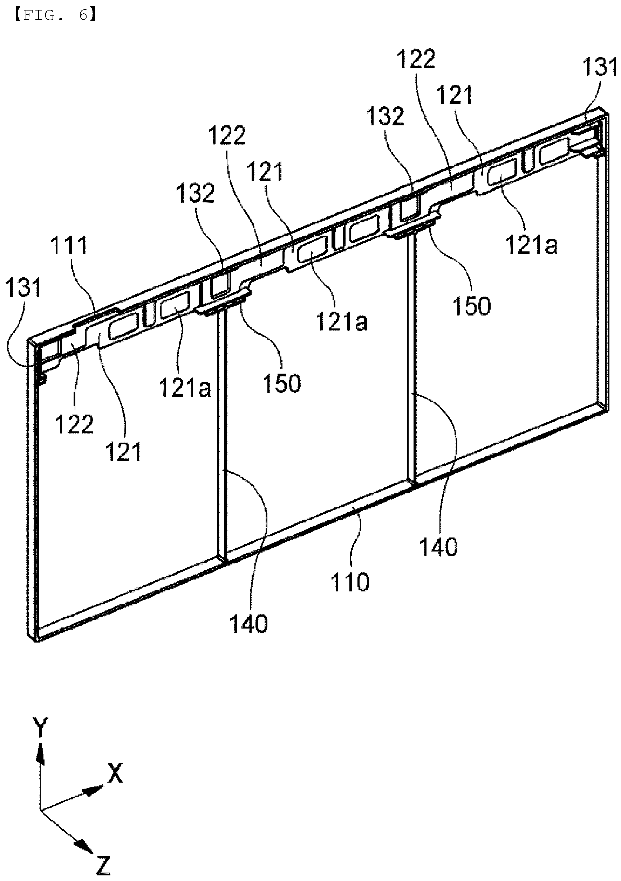

FIG. 5 is a perspective view of the frame unit constituting the battery pack according to the present invention when viewed in one direction, and FIG. 6 is a perspective view of the frame unit shown in FIG. 5 when viewed in the other direction.

The frame unit 100 according to the present invention includes an outer frame 110, a support frame 120, a plurality of receiving portions 130, a first rib 140, and a second rib 150.

The outer frame 110 is open in the center in order to form a battery cell receiving space S and forms the overall shape of the battery pack. The support frame 120, which is located inside an edge of one side of the outer frame 110, is a space in which the electrode terminals, the BMU, and the BMU cover are seated while inhibiting bending deformation in the longitudinal direction and the width direction.

Here, the support frame 120 is preferably constituted by a first seating portion 121 and a second seating portion 122, which is thicker than the first seating portion 121. More preferably, the electrode terminals of the battery cells 200 are seated on the first seating portion 121 while the printed circuit board 310 is seated on the second seating portion 122. Most preferably, a first opening 121a is formed in the first seating portion 121.

The thicker the support frame 120 is, the less the support frame is bent in the longitudinal direction or the width direction. In this case, however, the battery pack is also inevitably thickened, making it difficult to miniaturize the battery pack. In contrast, in the present invention, parts where the electrode terminals are not seated are designed to be thick while parts where the electrode terminals are seated are designed to be relatively thin, which is highly effective in preventing bending deformation while inhibiting an increase in thickness of the battery pack.

In addition, since the terminals are individually seated on the recess-shaped first seating portion 121 while being spaced apart from each other by a predetermined distance, it is possible to contribute to prevention of short circuit between the terminals while inhibiting movement of the electrode terminals. Furthermore, since the electrode terminals are exposed outward through the first opening 121a of the first seating portion 121, welding with the printed circuit board 310 is convenient, and heat generated during operation is easily dissipated, which may also contribute to securing safety.

Of course, the number and position of the first seating portions 121 shown in FIGs. 5 and 6 are not limited and may be changed based on the number and position of the battery cells received in the outer frame 110.

The plurality of receiving portions 130 is provided in an upper surface of the support frame 120 in the longitudinal direction and/or in the width direction, and may contribute to an increase in rigidity of the battery pack while fixing the BMU cover.

One side of the first rib 140 is connected to the outer frame 110, and the other side of the first rib is connected to the support frame 120, and more specifically the second rib 150. The first rib inhibits bending deformation in the width direction while partitioning the battery cell receiving space S. The second rib 150 is configured to minimize bending in the longitudinal direction, a detailed description of which will follow.

Meanwhile, the BMU cable 320 and the BMU connector 330 need to protrude outside the outer frame 110 so as to be connected to the device (not shown), and therefore a predetermined area, more specifically the outer frame 110, is provided with an incision portion 111 corresponding to a passage therefor.

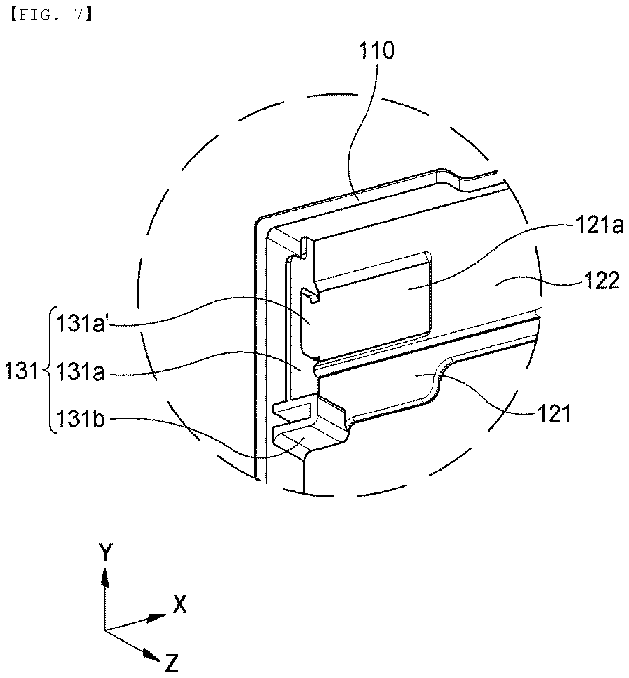

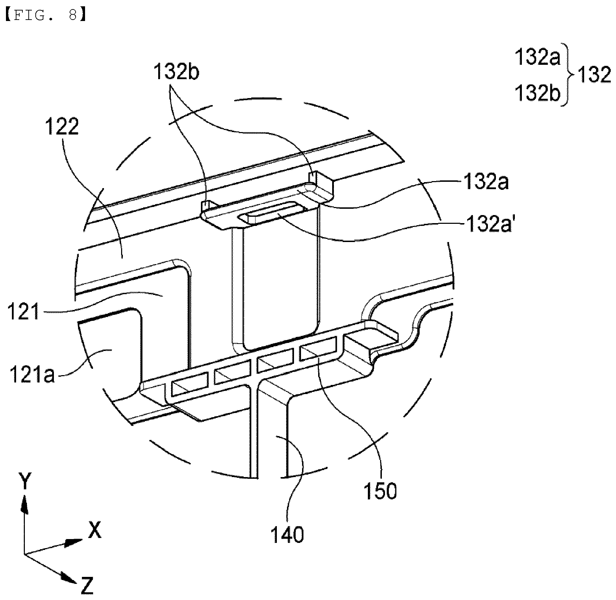

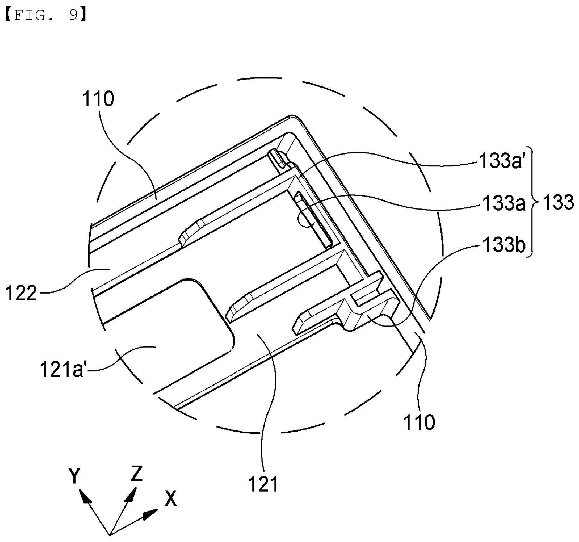

FIG. 7 is an enlarged perspective view of part A of FIG. 5, FIG. 8 is an enlarged perspective view of part B of FIG. 5, and FIG. 9 is an enlarged perspective view of part C of FIG. 5.

The receiving portion will be described in detail with reference to FIGs. 5 to 9.

The receiving portion 130 located at the upper surface of the support frame 120 may be constituted by a total of four receiving portions, such as one first receiving portion 131, two second receiving portions 132, and one third receiving portion 133.

First, the first receiving portion 131 is provided at an edge of one side of the support frame 120 in the width direction. The first receiving portion may include a first receiving plate 131a located spaced apart from an inner surface of the outer frame 110 having a predetermined height by a predetermined distance, the first receiving plate having a first fastening hole 131a', and a first connection portion 131b configured to connect the first receiving plate 131a and the outer frame 110 to each other (see FIG. 7).

The two second receiving portions 132 are provided at an edge of one side of the support frame 120 in the longitudinal direction so as to be spaced apart from each other, and the second receiving portions 132 are identical in configuration to each other. Each of the second receiving portions includes a second receiving plate 132a located spaced apart from the inner surface of the outer frame 110 having a predetermined height by a predetermined distance, the second receiving plate having a second fastening hole 132a', and a pair of second connecting portions 132b configured to connect the second receiving plate 132a and the outer frame 110 to each other (see FIG. 8).

In particular, the second receiving portions 132 are located so as to face each other while being spaced apart from the second rib 150, which has a double rib structure, more preferably a lattice structure having a plurality of partition walls configured to connect the second receiving portions to each other in addition to a double rib structure, by a predetermined distance, whereby it is possible to minimize bending deformation at the interface between the battery cells, which is susceptible to longitudinal bending deformation, i.e., near the first rib 140.

The third receiving portion 133 is located so as to face an edge of the other side of the support frame 120 in the width direction, i.e. the first receiving portion 131.

The third receiving portion includes a third receiving plate 133a located spaced apart from the inner surface of the outer frame 110 having a predetermined height by a predetermined distance, the third receiving plate having a third fastening hole 133a', and a third connection portion 133b configured to connect the third receiving plate 133a and the outer frame 110 to each other.

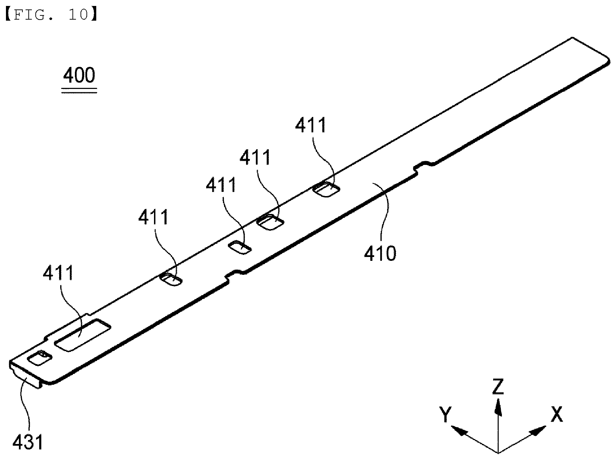

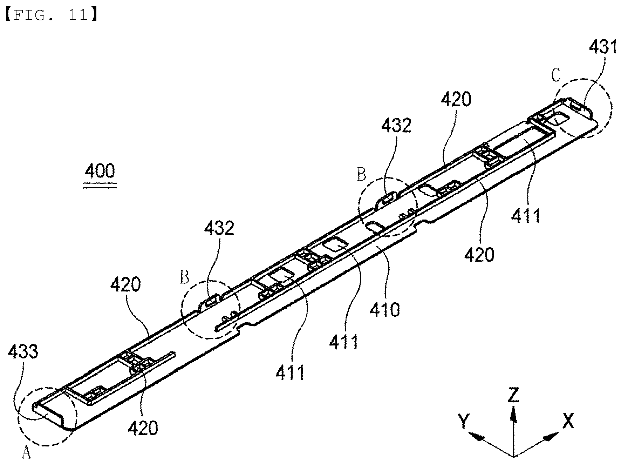

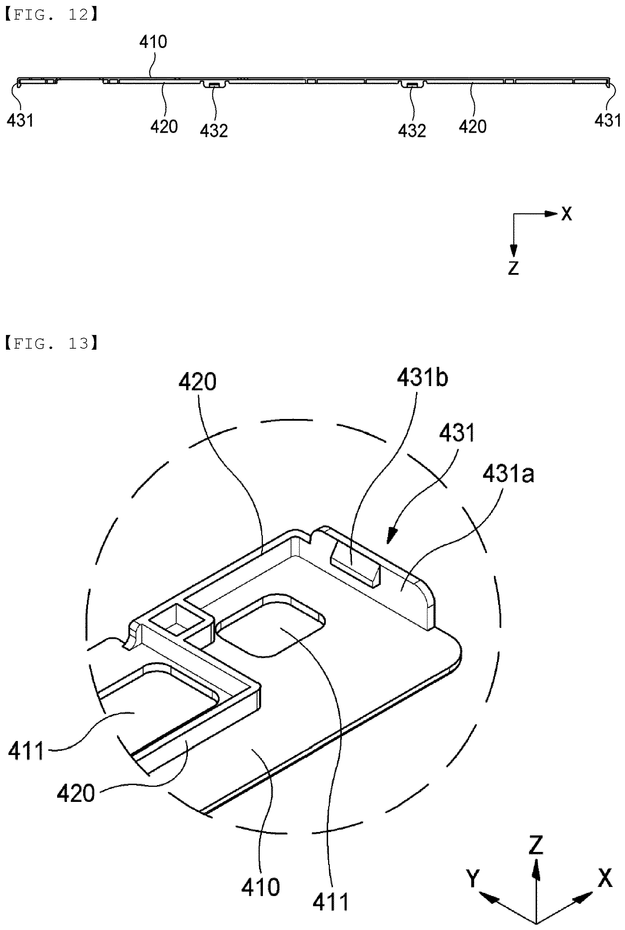

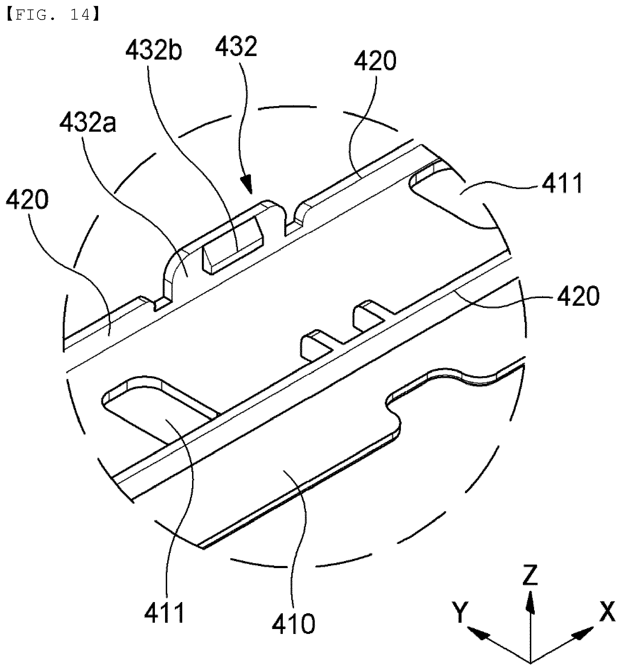

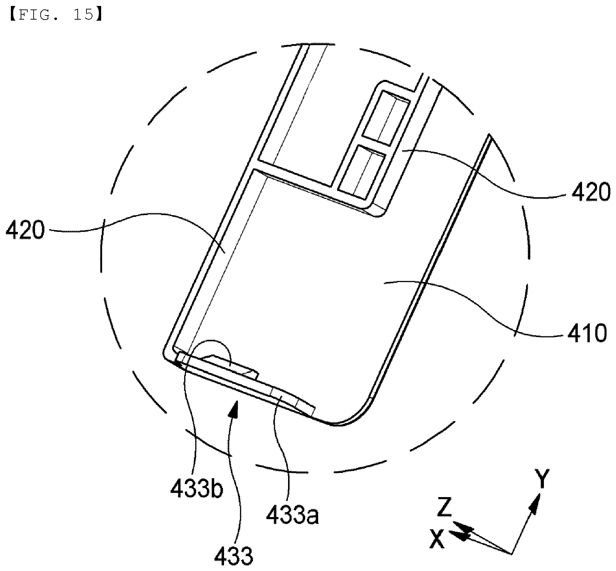

FIG. 10 is a perspective view of the BMU cover constituting the battery pack according to the present invention when viewed from above, FIG. 11 is an inverted perspective view of the BMU cover shown in FIG. 10, and FIG. 12 is a front view of the BMU cover shown in FIG. 10. In addition, FIG. 13 is an enlarged perspective view of part A of FIG. 11, FIG. 14 is an enlarged perspective view of part B of FIG. 11, and FIG. 15 is an enlarged perspective view of part C of FIG. 11.

The BMU cover 400, which has a plurality of insertion portions, will be described in detail with reference to FIGs. 10 to 15.

The BMU cover 400 is located above the support frame 120, is approximately rectangular in shape, and includes a cover plate 410, a third rib 420, and four insertion portions.

First, the cover plate 410 is provided in a predetermined region thereof with at least one second opening 411, and the second opening 411 is configured to improve the heat dissipation effect while preventing direct interference with an element (not shown) mounted on the printed circuit board 310 even if the element protrudes to a certain height. Accordingly, the position and size of the second openings 411 may be changed based on the size and disposition of the element on the printed circuit board 310.

The third rib 420 is provided on an inner surface of the cover plate 410, i.e., the surface of the cover plate that faces the other surface of the BMU 300, and is disposed so as to intersect in the width direction and/or the longitudinal direction in order to minimize bending deformation in the width direction and the longitudinal direction. Of course, the third rib 420 may also perform the function of pressing the printed circuit board 310 to prevent movement thereof.

The four insertion portions may be constituted by one first insertion portion 431, two second insertion portions 432, and one third insertion portion 433.

First, the first insertion portion 431 is inserted into the first receiving portion 131 of the support frame 120. Specifically, the first insertion portion includes a first insertion plate 431a extending vertically from an edge of one side of the cover plate 410 in the width direction and a first hook 431b formed on an inner surface of the first insertion plate 431a so as to be fastened to the first fastening hole 131a'.

Each of the second insertion portions 432 is inserted into a corresponding one of the second receiving portions 132 of the support frame 120, and includes a second insertion plate 432a extending vertically from an edge of the cover plate 410, and a second hook 432b formed on an inner surface of the second insertion plate 432a so as to be fastened to the second fastening hole 132a'. Of course, the two second insertion portions 432 are identical in configuration to each other.

The third insertion portion 433 is inserted into the third receiving portion 133 of the support frame 120, and may include a third insertion plate 433a extending vertically from an edge of the other side of the cover plate 410 in the width direction and a third hook 433b formed on an inner surface of the third insertion plate 433a so as to be fastened to the third fastening hole 133a'.

Meanwhile, the first insertion plate 431a, the second insertion plate 432a, and the third insertion plate 433a constituting the respective insertion portions may be connected to or provided at the third rib 420 disposed along the edge of the cover plate 410 so as to inhibit bending deformation in the longitudinal direction and the width direction.

Those skilled in the art to which the present invention pertains will appreciate that various applications and modifications are possible within the category of the present invention based on the above description.

### (Description of Reference Symbols)

100: Frame unit
110: Outer frame 111: Incision portion
120: Support frame
121: First seating portion 121a: First opening
122: Second seating portion
130: Receiving portion
131: First receiving portion
131a: First receiving plate 131a': First fastening hole
131b: First connection portion
132: Second receiving portion
132a: Second receiving plate 132a': Second fastening hole
132b: Second connection portion
133: Third receiving portion
133a: Third receiving plate 133a': Third fastening hole
133b: Third connection portion
140: First rib
150: Second rib
200: Battery cell
210: Cell case 220: Electrode terminal
300: BMU
310: Printed circuit board 320: BMU cable
330: BMU connector
400: BMU cover
410: Cover plate 411: Second opening
420: Third rib
431: First insertion portion
431a: First insertion plate 431b: First hook
432: Second insertion portion
432a: Second insertion plate 432b: Second hook
433: Third insertion portion
433a: Third insertion plate 433b: Third hook
500: First packaging member
510: Fixing portion
600: Second packaging member
S: Receiving space

## Claims

1. A battery pack comprising:
a frame unit (100) comprising:
a quadrangular outer frame (110) configured to define a receiving space (S); and
a support frame (120) located inside an edge of one side of the outer frame (110) in a longitudinal direction (X) of the frame unit (100);
a battery cell (200) received in the receiving space (S) ;
a BMU (300) having one surface facing an upper surface of the support frame (120), the BMU (300) being electrically connected to the battery cell (200); and
a BMU cover (400) comprising a cover plate (410) located at another surface of the BMU (300), wherein
the frame unit (100) further comprises:
at least one first rib (140) extending in a width direction (Y) of the frame unit (100), one side of the at least one first rib (140) being connected to the outer frame (110); and
a second rib (150) located along an edge of the support frame (120) in the longitudinal direction (X), the second rib (150) being connected to another side of the at least one first rib (140), the second rib (150) having a double rib structure,
wherein the support frame (120) comprises a first seating portion (121), the battery pack being **characterized in that** the support frame (120) comprises:
a second seating portion (122) that is thicker than the first seating portion (121), and
the first seating portion (121) has a first opening (121a) and a terminal of the battery cell (200) is seated on the first seating portion (121).

2. The battery pack according to claim 1, wherein a printed circuit board (310) of the BMU (300) is seated on the second seating portion (122).

3. The battery pack according to claim 1, wherein the support frame (120) includes a plurality of receiving portions (130) at the upper surface of the support frame (120) in at least one of the longitudinal direction (X) and in the width direction (Y), and
wherein the cover plate (410) has a plurality of insertion portions (431, 432, 433) configured to be inserted into the plurality of receiving portions (130).

4. The battery pack according to claim 3, wherein the plurality of receiving portions (130) includes a first receiving portion (131) comprising:
a first receiving plate (131a) provided at an edge of one side of the support frame (120) in the width direction (Y), the first receiving plate (131a) being located spaced apart from an inner surface of the outer frame (110) having a certain height by a first predetermined distance, the first receiving plate (131a) having a first fastening hole (131a'); and
a first connection portion (131b) configured to connect the first receiving plate (131a) and the outer frame (110) to each other, and
wherein the plurality of insertion portions includes a first insertion portion (431) comprising:
a first insertion plate (431a) extending vertically from an edge of one side of the cover plate (410) in the width direction (Y); and
a first hook (431b) formed on an inner surface of the first insertion plate (431a) so as to be fastened to the first fastening hole (131a').

5. The battery pack according to claim 4, wherein the plurality of receiving portions (130) includes a second receiving portion (132) comprising:
a second receiving plate (132a) provided at an edge of one side of the support frame (120) in the longitudinal direction (X), the second receiving plate (132a) being located spaced apart from the inner surface of the outer frame (110) having the certain height by a second predetermined distance, the second receiving plate (132a) having a second fastening hole (132a'); and
a pair of second connection portions (132b) configured to connect the second receiving plate (132a) and the outer frame (110) to each other, and
wherein the plurality of insertion portions includes a second insertion portion (432) comprising:
a second insertion plate (432a) extending vertically from the edge of the cover plate (410); and
a second hook (432b) formed on an inner surface of the second insertion plate (432a) so as to be fastened to the second fastening hole (132a').

6. The battery pack according to claim 4, wherein the plurality of receiving portions (130) includes a third receiving portion (133) comprising:
a third receiving plate (133a) provided at an edge of another side of the support frame (120) in the width direction (Y), the third receiving plate (133a) being located spaced apart from the inner surface of the outer frame (110) having the certain height by a third predetermined distance, the third receiving plate (133a) having a third fastening hole (133a'); and
a third connection portion (133b) configured to connect the third receiving plate (133a) and the outer frame (110) to each other, and
wherein the plurality of insertion portions includes a third insertion portion (433) comprising:
a third insertion plate (433a) extending vertically from an edge of another side of the cover plate (410) in the width direction (Y); and
a third hook (433b) formed on an inner surface of the third insertion plate (433a) so as to be fastened to the third fastening hole (133a').

7. The battery pack according to claim 1, wherein the second rib (150) has a lattice structure.

8. The battery pack according to claim 1, wherein the cover plate (410) has at an inner surface thereof facing the another surface of the BMU (300) a third rib (420) formed so as to intersect in at least one of the width direction (Y) and the longitudinal direction (X).

9. The battery pack according to claim 8, wherein the cover plate (410) has at least one second opening (411).

## Patentansprüche

1. Batteriepack, umfassend:
eine Rahmeneinheit (100), umfassend:
einen viereckigen Außenrahmen (110), der dazu konfiguriert ist, einen Aufnahmeraum (S) zu definieren; und
einen Stützrahmen (120), der innerhalb einer Kante einer Seite des Außenrahmens (110) in einer Längsrichtung (X) der Rahmeneinheit (100) angeordnet ist;
eine Batteriezelle (200), die in dem Aufnahmeraum (S) aufgenommen ist;
eine BMU (300), die eine Fläche aufweist, die einer oberen Fläche des Stützrahmens (120) zugewandt ist, wobei die BMU (300) elektrisch mit der Batteriezelle (200) verbunden ist; und
eine BMU-Abdeckung (400), umfassend eine Abdeckplatte (410), die an einer anderen Fläche der BMU (300) angeordnet ist, wobei die Rahmeneinheit (100) ferner umfasst:
mindestens eine erste Rippe (140), die sich in einer Breitenrichtung (Y) der Rahmeneinheit (100) erstreckt, wobei eine Seite der mindestens einen ersten Rippe (140) mit dem Außenrahmen (110) verbunden ist; und
eine zweite Rippe (150), die entlang einer Kante des Stützrahmens (120) in der Längsrichtung (X) angeordnet ist, wobei die zweite Rippe (150) mit einer anderen Seite der mindestens einen ersten Rippe (140) verbunden ist, wobei die zweite Rippe (150) eine Doppelrippenstruktur aufweist, wobei der Stützrahmen (120) einen ersten Sitzabschnitt (121) umfasst, wobei das Batteriepack **dadurch gekennzeichnet ist, dass** der Stützrahmen (120) umfasst:
einen zweiten Sitzabschnitt (122), der dicker als der erste Sitzabschnitt (121) ist, und
wobei der erste Sitzabschnitt (121) eine erste Öffnung (121a) aufweist und ein Anschluss der Batteriezelle (200) auf dem ersten Sitzabschnitt (121) aufgesetzt ist.

2. Batteriepack gemäß Anspruch 1, wobei eine Leiterplatte (310) der BMU (300) auf den zweiten Sitzabschnitt (122) aufgesetzt ist.

3. Batteriepack gemäß Anspruch 1, wobei der Stützrahmen (120) in mindestens einer von der Längsrichtung (X) und der Breitenrichtung (Y) eine Vielzahl von Aufnahmeabschnitten (130) an der oberen Fläche des Stützrahmens (120) umfasst, und
wobei die Abdeckplatte (410) eine Vielzahl von Einsetzabschnitten (431, 432, 433) aufweist, die dazu konfiguriert sind, in die Vielzahl von Aufnahmeabschnitten (130) eingesetzt zu werden.

4. Batteriepack gemäß Anspruch 3, wobei die Vielzahl von Aufnahmeabschnitten (130) einen ersten Aufnahmeabschnitt (131) umfasst, umfassend:
eine erste Aufnahmeplatte (131a), die an einer Kante einer Seite des Stützrahmens (120) in der Breitenrichtung (Y) vorgesehen ist, wobei die erste Aufnahmeplatte (131a) von einer Innenfläche des Außenrahmens (110), die eine bestimmte Höhe aufweist, um einen ersten vorbestimmten Abstand beabstandet angeordnet ist, wobei die erste Aufnahmeplatte (131a) ein erstes Befestigungsloch (131a') aufweist; und
einen ersten Verbindungsabschnitt (131b), der dazu konfiguriert ist, die erste Aufnahmeplatte (131a) und den Außenrahmen (110) miteinander zu verbinden, und
wobei die Vielzahl von Einsetzabschnitten einen ersten Einsetzabschnitt (431) umfasst, umfassend:
eine erste Einsetzplatte (431a), die sich vertikal von einer Kante einer Seite der Abdeckplatte (410) in der Breitenrichtung (Y) erstreckt; und
einen ersten Haken (431b), der an einer Innenfläche der ersten Einsetzplatte (431a) so gebildet ist, dass er an dem ersten Befestigungsloch (131a') befestigt ist.

5. Batteriepack gemäß Anspruch 4, wobei die Vielzahl von Aufnahmeabschnitten (130) einen zweiten Aufnahmeabschnitt (132) umfasst, umfassend:
eine zweite Aufnahmeplatte (132a), die an einer Kante einer Seite des Stützrahmens (120) in der Längsrichtung (X) vorgesehen ist, wobei die zweite Aufnahmeplatte (132a) von der Innenfläche des Außenrahmens (110), die die bestimmte Höhe aufweist, um einen zweiten vorbestimmten Abstand beabstandet angeordnet ist, wobei die zweite Aufnahmeplatte (132a) ein zweites Befestigungsloch (132a') aufweist; und
ein Paar zweiter Verbindungsabschnitte (132b), die dazu konfiguriert sind, die zweite Aufnahmeplatte (132a) und den Außenrahmen (110) miteinander zu verbinden, und
wobei die Vielzahl von Einsetzabschnitten einen zweiten Einsetzabschnitt (432) umfasst, umfassend:
eine zweite Einsetzplatte (432a), die sich vertikal von der Kante der Abdeckplatte (410) erstreckt; und einen zweiten Haken (432b), der an einer Innenfläche der zweiten Einsetzplatte (432a) so gebildet ist, dass er an dem zweiten Befestigungsloch (132a') befestigt ist.

6. Batteriepack gemäß Anspruch 4, wobei die Vielzahl von Aufnahmeabschnitten (130) einen dritten Aufnahmeabschnitt (133) umfasst, umfassend:
eine dritte Aufnahmeplatte (133a), die an einer Kante einer anderen Seite des Stützrahmens (120) in der Breitenrichtung (Y) vorgesehen ist, wobei die dritte Aufnahmeplatte (133a) von der Innenfläche des Außenrahmens (110), die die bestimmte Höhe aufweist, um einen dritten vorbestimmten Abstand beabstandet angeordnet ist, wobei die dritte Aufnahmeplatte (133a) ein drittes Befestigungsloch (133a') aufweist; und
einen dritten Verbindungsabschnitt (133b), der dazu konfiguriert ist, die dritte Aufnahmeplatte (133a) und den Außenrahmen (110) miteinander zu verbinden, und
wobei die Vielzahl von Einsetzabschnitten einen dritten Einsetzabschnitt (433) umfasst, umfassend:
eine dritte Einsetzplatte (433a), die sich vertikal von einer Kante einer anderen Seite der Abdeckplatte (410) in der Breitenrichtung (Y) erstreckt; und
einen dritten Haken (433b), der an einer Innenfläche der dritten Einsetzplatte (433a) so gebildet ist, dass er an dem dritten Befestigungsloch (133a') befestigt ist.

7. Batteriepack gemäß Anspruch 1, wobei die zweite Rippe (150) eine Gitterstruktur aufweist.

8. Batteriepack gemäß Anspruch 1, wobei die Abdeckplatte (410) an einer Innenfläche davon, die der anderen Fläche der BMU (300) zugewandt ist, eine dritte Rippe (420) aufweist, die so gebildet ist, dass sie sich in mindestens einer von der Breitenrichtung (Y) und der Längsrichtung (X) kreuzt.

9. Batteriepack gemäß Anspruch 8, wobei die Abdeckplatte (410) mindestens eine zweite Öffnung (411) aufweist.

## Revendications

1. Bloc-batterie comprenant :
une unité de structure (100) comprenant :
une structure externe (110) quadrangulaire configurée pour définir un espace de réception (S) ; et
une structure de support (120) située à l'intérieur d'un bord d'un côté de la structure externe (110) dans une direction longitudinale (X) de l'unité de structure (100) ;
un élément de batterie (200) reçu dans l'espace de réception (S) ;
une unité de gestion de batterie, BMU (300) présentant une surface faisant face à une surface supérieure de la structure de support (120), la BMU (300) étant connectée électriquement à l'élément de batterie (200) ; et
un couvercle de BMU (400) comprenant une plaque de couvercle (410) située au niveau d'une autre surface de la BMU (300), dans lequel
l'unité de structure (100) comprend en outre :
au moins une première nervure (140) s'étendant dans une direction de largeur (Y) de l'unité de structure (100), un côté de l'au moins une première nervure (140) étant connecté à la structure externe (110) ; et
une deuxième nervure (150) située le long d'un bord de la structure de support (120) dans la direction longitudinale (X), la deuxième nervure (150) étant connectée à un autre côté de l'au moins une première nervure (140), la deuxième nervure (150) présentant une structure de nervure double,
dans lequel la structure de support (120) comprend une première partie de logement (121),
le bloc-batterie étant **caractérisé en ce que** la structure de support (120) comprend :
une deuxième partie de logement (122) qui est plus épaisse que la première partie de logement (121), et
la première partie de logement (121) présente une première ouverture (121a) et une borne de l'élément de batterie (200) est positionnée sur la première partie de logement (121).

2. Bloc-batterie selon la revendication 1, dans lequel une carte de circuit imprimé (310) de la BMU (300) est placée sur la deuxième partie de logement (122).

3. Bloc-batterie selon la revendication 1, dans lequel la structure de support (120) comporte une pluralité de parties de réception (130) au niveau de la surface supérieure de la structure de support (120) dans au moins une parmi la direction longitudinale (X) et la direction de largeur (Y), et
dans lequel la plaque de couvercle (410) présente une pluralité de parties d'insertion (431, 432, 433) configurées pour être insérées dans la pluralité de parties de réception (130).

4. Bloc-batterie selon la revendication 3, dans lequel la pluralité de parties de réception (130) comporte une première partie de réception (131) comprenant :
une première plaque de réception (131a) prévue au niveau d'un bord d'un côté de la structure de support (120) dans la direction de largeur (Y), la première plaque de réception (131a) étant située espacée d'une surface interne de la structure externe (110) présentant une certaine hauteur selon une première distance prédéterminée, la première plaque de réception (131a) comportant un premier trou de fixation (131a') ; et
une première partie de connexion (131b) configurée pour connecter la première plaque de réception (131a) et la structure externe (110) l'un à l'autre, et
dans lequel la pluralité de parties d'insertion comporte une première partie d'insertion (431) comprenant :
une première plaque d'insertion (431a) s'étendant verticalement à partir d'un bord d'un côté de la plaque de couvercle (410) dans la direction de largeur (Y) ; et
un premier crochet (431b) formé sur une surface interne de la première plaque d'insertion (431a) de manière à être fixé au premier trou de fixation (131a').

5. Bloc-batterie selon la revendication 4, dans lequel la pluralité de parties de réception (130) comporte une seconde partie de réception (132) comprenant :
une deuxième plaque de réception (132a) prévue au niveau d'un bord d'un côté de la structure de support (120) dans la direction longitudinale (X), la deuxième plaque de réception (132a) étant située espacée de la surface interne de la structure externe (110) présentant la certaine hauteur selon une deuxième distance prédéterminée, la deuxième plaque de réception (132a) comportant un deuxième trou de fixation (132a') ; et
une paire de secondes parties de connexion (132b) configurées pour connecter la deuxième plaque de réception (132a) et la structure externe (110) l'un à l'autre, et
dans lequel la pluralité de parties d'insertion comporte une deuxième partie d'insertion (432) comprenant :
une deuxième plaque d'insertion (432a) s'étendant verticalement à partir du bord de la plaque de couvercle (410) ; et un deuxième crochet (432b) formé sur une surface interne de la deuxième plaque d'insertion (432a) de manière à être fixé au deuxième trou de fixation (132a').

6. Bloc-batterie selon la revendication 4, dans lequel la pluralité de parties de réception (130) comporte une troisième partie de réception (133) comprenant :
une troisième plaque de réception (133a) prévue au niveau d'un bord d'un autre côté de la structure de support (120) dans la direction de largeur (Y), la troisième plaque de réception (133a) étant située espacée de la surface interne de la structure externe (110) présentant la certaine hauteur selon une troisième distance prédéterminée, la troisième plaque de réception (133a) comportant un troisième trou de fixation (133a') ; et
une troisième partie de connexion (133b) configurée pour connecter la troisième plaque de réception (133a) et la structure externe (110) l'un à l'autre, et
dans lequel la pluralité de parties d'insertion comporte une troisième partie d'insertion (433) comprenant :
une troisième plaque d'insertion (433a) s'étendant verticalement à partir d'un bord d'un autre côté de la plaque de couvercle (410) dans la direction de largeur (Y) ; et
un troisième crochet (433b) formé sur une surface interne de la troisième plaque d'insertion (433a) de manière à être fixé au troisième trou de fixation (133a').

7. Bloc-batterie selon la revendication 1, dans lequel la deuxième nervure (150) a une structure en treillis.

8. Bloc-batterie selon la revendication 1, dans lequel la plaque de couvercle (410) présente, au niveau d'une surface interne de celle-ci faisant face à l'autre surface de la BMU (300), une troisième nervure (420) formée de manière à croiser au moins une parmi la direction de largeur (Y) et la direction longitudinale (X).

9. Bloc-batterie selon la revendication 8, dans lequel la plaque de couvercle (410) présente au moins une deuxième ouverture (411).
